# EUROPÄISCHE PATENTSCHRIFT

(11) **EP 3 288 717 B1**
(45) Veröffentlichungstag und Bekanntmachung des Hinweises auf die Patenterteilung: **12.01.2022**
(21) Anmeldenummer: 16720763.8
(22) Anmeldetag: 22.04.2016
(51) Int. Cl.: B25D 11/00

(54) **REGELVERFAHREN ZUR VERWENDUNG EINES KERNBOHRSYSTEMS UND KERNBOHRSYSTEM**
METHOD OF CONTROLLING A CORE DRILLING SYSTEM AND CORE DRILLING SYSTEM
PROCÉDÉ DE RÉGLAGE D'UN SYSTÈME DE CORRATAGE ET SYSTÈME DE CARROTAGE

(30) Priorität: 28.04.2015 EP 15165312
(43) Veröffentlichungstag der Anmeldung: 07.03.2018
(73) Patentinhaber: Hilti Aktiengesellschaft, 9494 Schaan (LI)
(72) Erfinder: DREXL, Tobias, 86947 Weil (DE); HARTIG, Andreas, 86161 Augsburg (DE); SCHMALHOLZ, Thomas, 87600 Kaufbeuren (DE); LINK, Bernhard, 86986 Schwabbruck (DE); GOLUBOVIC, Goran, 86807 Buchloe (DE)
(74) Vertreter: Hilti Aktiengesellschaft Corporate Intellectual Property
(86) Internationale Anmeldenummer: PCT/EP2016/059011
(87) Internationale Veröffentlichungsnummer: WO 2016/173940

(56) Entgegenhaltungen:
- EP-A1- 1 607 186
- EP-A2- 0 997 801
- DE-A1-102011 080 374
- DE-T5-112013 000 138

## Beschreibung

Die vorliegende Erfindung bezieht sich auf ein Verfahren zur Regelung eines Kernbohrsystems enthaltend eine Kernbohrmaschine mit einem Bohrwerkzeug zum Erzeugen eines Bohrlochs in einen Werkstoff und eine Vorschubeinrichtung zum Antreiben der Kernbohrmaschine entlang einer Maschinenhalteeinrichtung.

Darüber hinaus bezieht sich die Erfindung auf ein Kembohrsystem enthaltend eine Kernbohrmaschine und eine Vorschubeinrichtung zum Antreiben der Kernbohrmaschine entlang einer Maschinenhalteeinrichtung zur Verwendung des erfindungsgemäßen Verfahrens.

Die Beschaffenheit eines mineralischen Werkstoffs, wie z.B. Beton, Sandstein, Mauerwerk oder ähnliches, in den mit Hilfe eines Kernbohrsystems ein Bohrloch geschnitten werden soll, ist selten vollständig homogen in seinem strukturellen Aufbau. Mit anderen Worten: in dem mineralischen Werkstoff befinden sich neben Armierungseisen (auch Bewehrungsstahl, Betonstahl oder Moniereisen genannt) auch häufig Hohlräume, Lücken und/oder Zwischenschichten aus Isolierungs- bzw. Dämmmaterial. Diese Zwischenschichten weisen für gewöhnlich eine geringere Dichte auf als der mineralische Werkstoff, wodurch diese wesentlich weicher sind als der mineralische Werkstoff.

Die sich in dem mineralischen Werkstoff befindenden Hohlräume, Lücken und Zwischenschichten aus Isolierungs- bzw. Dämmmaterial stellen für Kernbohrsysteme bzw. für Kernbohrmaschinen ein erhebliches Problem dar. Sobald ein als Bohrkrone ausgestaltetes Kernbohrwerkzeug auf einen Hohlraum, eine Lücke oder eine Zwischenschicht in dem mineralischen Werkstoff stößt, vermutet das Kernbohrsystem fälschlicherweise anhand der entsprechenden Veränderung an bestimmten Bohrparametern, dass kein Material mehr zum Zerschneiden vorliegt und das Kernbohrsystem den Kernbohrvorgang für abgeschlossen hält. Eine derartige Situation wird als "Durchbruch" des mineralischen Werkstoffs bezeichnet. Der Anwender des Kernbohrsystems muss daraufhin den Kernbohrvorgang so lange bzw. so häufig wieder ansetzen bis wirklich das gesamte Material zerschnitten ist. Dies verlängert den gesamten Kernbohrvorgang erheblich.

Ein weiteres Problem besteht bei Kernbohrsystemen gemäß dem Stand der Technik darin, dass entweder gar nicht oder nur sehr ungenau zwischen gewissen Situationen, die während des eigentlichen Kernbohrvorgangs auftreten können, unterschieden werden kann. Bestimmte Bohrsituation, wie z.B. dem Anschlagen an einer vorausgewählten Stoppeinrichtung (Tiefenanschlag) an der Maschinenhalteeinrichtung, einer ungewollten Blockade der Vorschubeinrichtung, dem Erreichen einer vorausgewählten Bohrtiefe oder dem Nachlassen der Schneidefunktion der Bohrkronensegmente (sog. Polieren der Bohrkrone), erfordern ein mehr oder weniger sofortiges Beenden des Bohrvorgangs und Entfernen der Bohrkrone aus dem Bohrloch.

Beispielsweise wird in der DE 10 2011 080 374 A1 eine Werkzeugmaschine offenbart, die eine Belastungskontrolleinheit enthält, die dazu vorgesehen ist, direkt und/oder indirekt einen Anpressdruck zu bewerten. In der EP 1 443 176 wird ein Kernbohrverfahren und ein Kernbohrsystem gemäß den Oberbegriffen der Ansprüche 1 und 5 offenbart.

Nachteiliger Weise unterscheiden jedoch herkömmliche Kernbohrsystem nicht zwischen dem Erreichen von in dem mineralischen Werkstoff befindlichen Hohlräumen, Lücken und Zwischenschichten aus Isolierungs- bzw. Dämmmaterial, dem Vorliegen eines Durchbruchs in dem zu bearbeitenden Werkstoff oder dem Vorliegen einer der vorstehend genannten Bohrsituationen.

Dieses Nichterkennen bzw. Nichtunterscheiden durch das Kernbohrsystem führt zu einer erheblichen Verlängerung des gesamten Kernbohrvorgangs.

Die **Aufgabe** der vorliegenden Erfindung besteht im Bereitstellen eines Regelverfahrens zur Verwendung eines Kernbohrsystems enthaltend eine Kernbohrmaschine und eine Vorschubeinrichtung zum Antreiben der Kernbohrmaschine entlang einer Maschinenhalteeinrichtung, mit dem die vorstehend beschriebenen Probleme gelöst sowie ein Kernbohrvorgang schneller und effizienter gestaltet werden kann. Darüber hinaus besteht die Aufgabe der vorliegenden Erfindung im Bereitstellen eines Kernbohrsystems enthaltend eine Kernbohrmaschine und eine Vorschubeinrichtung zum Antreiben der Kernbohrmaschine entlang einer Maschinenhalteeinrichtung zur Verwendung des Verfahrens durch die vorstehend beschriebenen Probleme gelöst sowie ein Kernbohrvorgang schneller und effizienter gestaltet werden kann.

Die Aufgabe wird durch die Merkmale der unabhängigen Ansprüche gelöst Vorteilhafte Weiterentwicklungen der Erfindung ergeben sich aus den entsprechenden Unteransprüchen.

Demnach wird ein Verfahren zur Regelung eines Kernbohrsystems enthaltend eine Kernbohrmaschine mit einem Bohrwerkzeug zum Erzeugen eines Bohrlochs in einen Werkstoff und eine Vorschubeinrichtung zum Antreiben der Kernbohrmaschine entlang einer Maschinenhalteeinrichtung bereitgestellt.

Erfindungsgemäss enthält das Verfahren die Schritte, wie in Anspruch 1 angegeben.

Hierdurch kann zwischen den im mineralischen Werkstoff befindlichen Hohlräume, Lücken und Zwischenschichten aus Isolierungs- bzw. Dämmmaterial sowie einem Durchbruch unterschieden werden. Darüber hinaus kann durch das erfindungsgemäße Regelverfahren zwischen den vorstehend beschriebenen Bohrsituationen, wie z.B. dem Anschlagen an einer vorausgewählten Stoppeinrichtung (Tiefenanschlag) an der Maschinenhalteeinrichtung, einer ungewollten Blockade der Vorschubeinrichtung, dem Erreichen einer vorausgewählten Bohrtiefe oder dem Nachlassen der Schneidefunktion der Bohrkronensegmente, unterschieden werden.

Bei der vorbestimmten Bohrsituation kann es sich beispielsweise um das Anschlagen an einer vorausgewählten Stoppeinrichtung (Tiefenanschlag) an der Maschinenhalteeinrichtung, einer ungewollten Blockade der Vorschubeinrichtung durch einen Fremdkörper, dem Erreichen einer vorausgewählten Bohrtiefe und/oder dem Stumpfwerden bzw. Nachlassen der Schneidefunktion der Bohrkronensegmente (sog. Polieren der Bohrkrone) handeln.

Gemäß einer vorteilhaften Ausführungsform der vorliegenden Erfindung kann es dienlich sein, dass der Bohrparameter einem Drehzahlwert eines Antriebs der Kernbohrmaschine, einem von dem Antrieb erzeugten und auf das Bohrwerkzeug übertragenen Drehmomentwert oder einem Stromstärkenwert des Antriebs entspricht.

Gemäß einer vorteilhaften Ausführungsform der vorliegenden Erfindung ist es möglich, dass der Bohrparameter einem Drehzahlwert eines Vorschubantriebs, einem von dem Vorschubantrieb erzeugten Drehmomentwert oder einem Stromstärkenwert des Vorschubantriebs entspricht. Entsprechend einer weiteren Ausführungsform der vorliegenden Erfindung kann es vorteilhaft sein, dass der vorbestimmte Schwellwert einem vorbestimmten prozentualen Anteil an dem entsprechenden Bohrparameter entspricht.

Die Erfindung wird bezüglich vorteilhafter Ausführungsbeispiele näher erläutert, hierbei zeigt
- Fig. 1: ein erfindungsgemässes Kernbohrsystem mit einer Kernbohrmaschine, einer Vorschubeinrichtung und einer Maschinenhalteeinrichtung in einer Ausgangsposition;
- Fig. 2: das erfindungsgemässe Kernbohrsystem mit der Kernbohrmaschine, der Vorschubeinrichtung und der Maschinenhalteeinrichtung zu Beginn eines Kernbohrvorgangs in einen mineralischen Werkstoff;
- Fig. 3: das erfindungsgemässe Kernbohrsystem mit der Kernbohrmaschine, der Vorschubeinrichtung und der Maschinenhalteeinrichtung mit einer Bohrkrone in dem mineralischen Werkstoff;
- Fig. 4: das erfindungsgemässe Kernbohrsystem mit der Kernbohrmaschine, der Vorschubeinrichtung und der Maschinenhalteeinrichtung mit der Bohrkrone beim einem Auftreffen auf ein Armierungseisen in dem mineralischen Werkstoff; und
- Fig. 5: das erfindungsgemässe Kernbohrsystem mit der Kernbohrmaschine, der Vorschubeinrichtung und der Maschinenhalteeinrichtung mit der Bohrkrone nach einem Zerschneiden eines Armierungseisens in dem mineralischen Werkstoff.

### AUSFÜHRUNGSBEISPIEL:

### VORRICHTUNG:

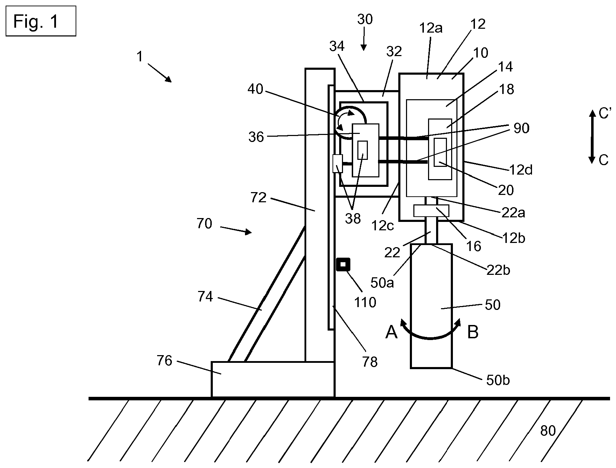

Fig. 1 zeigt ein Kernbohrsystem 1 als einen Zusammenschluss aus einer Werkzeugmaschine 10, einer Vorschubeinrichtung 30, einem Bohrwerkzeug 50 in Form eine Bohrkrone und eine Maschinenhalteeinrichtung in Form eines Maschinenständers 70.

Die Werkzeugmaschine 10 ist in Form einer Kernbohrmaschine ausgestaltet und enthält ein Gehäuse 12, einen Antrieb 14, ein Getriebe 16, eine erste Steuerungseinheit 18, Sensoren 20 und eine Antriebswelle 22. Der Antrieb 14 ist in Form eines Elektromotors gestaltet. Alternativ kann auch jede andere geeignete Antriebsart gewählt werden.

Gemäss einer speziellen Ausgestaltungsform der vorliegenden Erfindung kann der Antrieb 14 durch einen Hochfrequenzmotor gebildet sein.

Die erste Steuerungseinheit 18 ist so ausgestaltet, dass diese sämtlichen Parameter der Werkzeugmaschine 10 und insbesondere sämtliche Parameter des Antriebs 14, welche von den Sensoren 20 der Werkzeugmaschine 10 gemessen werden, erfasst. Zu diesen Parametern zählt beispielsweise der eingelegte Gang des Getriebes 16, die Drehzahl des Elektromotors 14, das von dem Elektromotor 14 erzeugte Drehmoment, die Drehzahl des Bohrwerkzeugs 50, die anliegende und/oder abgegebene Leistung des Elektromotors 14, die anliegende Stromstärke des Elektromotors 14, etc.

Das Gehäuse 12 weist eine obere Seite 12a, eine untere Seite 12b, eine linke Seite 12c und eine rechte Seite 12d auf. Der Antrieb 14 befindet sich im Inneren des Gehäuses 12.

Die Antriebswelle 22 weist ein erstes Ende 22a und ein zweites Ende 22b auf. Das erste Ende 22a der Antriebswelle 22 ist so mit dem Antrieb 14 verbunden, dass der als Elektromotor ausgestaltete Antrieb 14 die Antriebswelle 22 in eine erste Drehbewegung A oder zweite Drehbewegung B versetzen kann. Das zweite Ende 22b der Antriebswelle 22 ragt an der unteren Seite 12b des Gehäuses 12 aus der Kernbohrmaschine 10 heraus. Des Weiteren weist das Bohrwerkzeug 50 in Gestalt einer zylindrischen Bohrkrone ein erstes Ende 50a und ein zweites Ende 50b auf. Das erste Ende 50a des Bohrwerkzeugs 50 ist drehfest mit dem zweiten Ende 22b der Antriebswelle 22 verbunden. Über die Antriebswelle 22 kann die Werkzeugmaschine 10 das Bohrwerkzeug 50 in die erste Drehbewegung A oder in die zweite Drehbewegung B versetzten.

Die Vorschubeinrichtung 30 enthält ein Gehäuse 32, in dem ein Vorschubantrieb 34, eine zweite Steuerungseinheit 36, Sensoren 38 sowie ein Antriebsritzel 40 positioniert sind. Die zweite Steuerungseinheit 36 ist so ausgestaltet, dass diese sämtlichen Parameter der Vorschubeinrichtung 30 und insbesondere die Parameter des Vorschubantriebs 34, welche von den Sensoren 38 der Vorschubeinrichtung 30 gemessen werden, erfasst. Zu diesen gemessenen Parametern zählt beispielsweise die Vorschubgeschwindigkeit der Vorschubeinrichtung 30 zum Maschinenständer 70 bzw. Werkstück 80, die bereits zurückgelegte Wegstrecke der Vorschubeinrichtung 30 seit Beginn des Bohrvorgangs gemessen von einem zu definierenden Startpunkt (auch Nullpunkt genannt), die Position der Vorschubeinrichtung 30 entlang des Maschinenständers 70, der Drehwinkel des Vorschubantriebs 34, etc.

Darüber hinaus kann eine Vielzahl an Parametern von der Steuerungseinheit 36 der Vorschubeinrichtung 30 berechnet werden. Die Parameterberechnung erfolgt dabei anhand eines Vergleichs zwischen den von den Sensoren 38 erfassten Parameter, wie z.B. dem Drehwinkel des Antriebsritzels 40, und den vorgegebenen (d.h. voreingestellten) Parametern. Aus der Parameterberechnung kann unter anderem die Vorschubgeschwindigkeit der Vorschubeinrichtung 30 zum Maschinenständer 70, die relative und/oder absolute Position der Vorschubeinrichtung 30, die bereits zurückgelegte Wegstrecke der Vorschubeinrichtung 30 seit Beginn des Bohrvorgangs sowie der Zeitpunkt und/oder die Wegstrecke bis zum Erreichen des Anschlags des Bohrwerkzeugs 50 ermittelt werden.

Der Vorschubantrieb 34 ist dabei, wie in Fig. 1 gezeigt, gemäss einer ersten Ausgestaltung in Form eines Elektromotors ausgestaltet.

Der Vorschubantrieb 34 treibt unter Kontrolle der Steuerungseinheit 36 das Antriebsritzel 40 und damit die Vorschubeinrichtung 30 relativ zum Maschinenständer 70 an.

Die Vorschubeinrichtung 30 ist derartig ausgestaltet, dass diese an den Maschinenständer 70 montiert werden kann (wie nachfolgend beschrieben) und mit Hilfe des Antriebsritzels 40 entlang des Maschinenständers 70 in Pfeilrichtung C bewegt werden kann. Die Sensoren 38 sind in Gestalt von Winkel-, Drehwinkel-, Beschleunigungs-, Geschwindigkeits- bzw. Positionssensoren, und dabei so ausgestaltet, dass diese entweder inkrementell direkt am Vorschubantrieb 34 oder absolut entlang des Maschinenständers 70 die Beschleunigung, die Vorschubgeschwindigkeit, den Winkel, den Drehwinkel sowie die Position der Vorschubeinrichtung 30 erfassen.

Der Maschinenständer 70 enthält eine Führungsschiene 72, ein Verstrebungselement 74 sowie eine Grundplatte 76. Die Führungsschiene 72 ist so auf der Grundplatte 76 positioniert und von dem Verstrebungselement 74 gestützt, dass die Führungsschiene 72 vertikal oder im vorgegebenen Winkel ausgerichtet ist. Des Weiteren weist die Führungsschiene 72 an einer Seite eine Zahnstange 78 auf. Das Verstrebungselement 74 ist dabei optional und kann gemäss einer alternativen Ausgestaltungsform des Maschinenständers auch weggelassen sein.

Wie ebenfalls in Fig. 1 dargestellt, ist das Gehäuse 12 der Werkzeugmaschine 10 an dem Gehäuse 32 der Vorschubeinrichtung 30 befestigt.

Die Vorschubeinrichtung 30 ist so an dem Maschinenständer 70 montiert, dass das Antriebsritzel 40 der Vorschubeinrichtung 30 in die Zahnstange 78 des Maschinenständers 70 eingreift. Wenn unter Kontrolle der Steuerungseinheit 36 der Vorschubantrieb 34 das Antriebsritzel 40 in eine Drehbewegung versetzt, wird die Vorschubeinrichtung 30 reversibel entlang des Maschinenständers 70 in Pfeilrichtung C bzw. C' bewegt. Dadurch, dass die Werkzeugmaschine 10 an der Vorschubeinrichtung 30 befestigt ist, wird durch das Bewegen der Vorschubeinrichtung 30 entlang des Maschinenständers 70 in Pfeilrichtung C auch die Werkzeugmaschine 10 entlang des Maschinenständers 70 in Pfeilrichtung C bewegt. Durch dieses vertikale Bewegen der Werkzeugmaschine 10 wird das an der Werkzeugmaschine 10 befestigte Bohrwerkzeug 50 in Gestalt der zylindrischen Bohrkrone vertikal in das zu bearbeitenden Werkstück 80, d.h. in den Untergrund, befördert, wodurch ein Loch in das Werkstück 80 gebohrt wird. Der Werkstoff 80 ist dabei als mineralischer Werkstoff, insbesondere als Beton mit Armierungseisen 81 ausgestaltet.

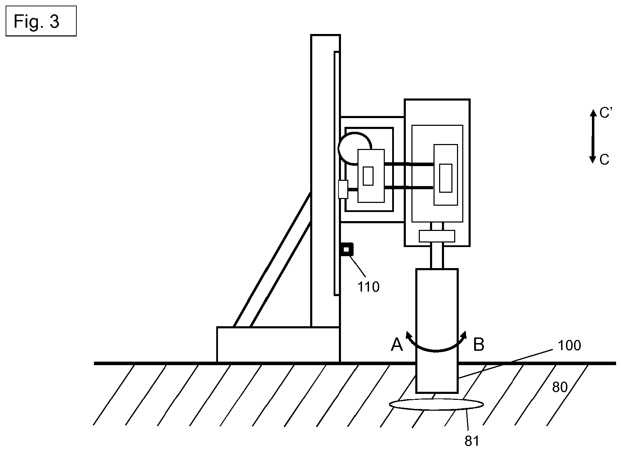

Wie bereits vorstehend beschrieben, messen die jeweiligen Sensoren 38 der Vorschubeinrichtung 30 die Parameter der Vorschubeinrichtung 30. Darüber hinaus messen die jeweiligen Sensoren 38 der Werkzeugmaschine 10 die Parameter der Werkzeugmaschine 10. Wie in Fig. 3 dargestellt, sind die Vorschubeinrichtung 30 sowie die Werkzeugmaschine 10 durch Verbindungselemente 90 derartig miteinander verbunden, dass sämtliche erfassbare Parameter der Vorschubeinrichtung 30 zu der Werkzeugmaschine 10 gesendet werden können und sämtliche erfassbare Parameter der Werkzeugmaschine 10 zu der Vorschubeinrichtung 30 gesendet werden können. Es liegt somit eine bidirektionale Kommunikation zwischen Vorschubeinrichtung 30 und der Werkzeugmaschine 10 vor. Aufgrund dieser bidirektionalen Kommunikation ist es unter anderem möglich, dass beispielsweise über einen nicht gezeigten Startschalter an der Werkzeugmaschine 10 die Vorschubeinrichtung 30 gestartet und in Betrieb genommen wird.

Darüber hinaus ist es insbesondere möglich, dass der Informationsfluss, d.h. die bidirektionale Übertragung der Parameter, zwischen der Vorschubeinrichtung 30 und der Werkzeugmaschine 10 mit Hilfe eines nicht gezeigten Stromkabels erfolgt. Gemäss einer vorteilhaften Ausgestaltungsform kann dabei die bidirektionale Übertragung der Parameter von dem Stromkabel 100 über die Werkzeugmaschine 10 zu der Vorschubeinrichtung 30 erfolgen.

### BOHRVORGANG:

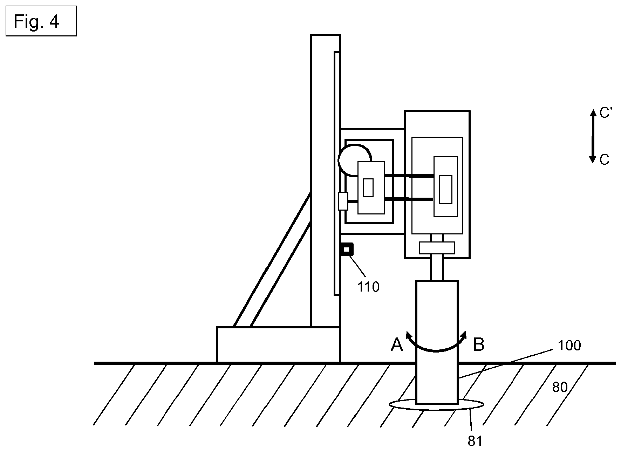

Wie bereits vorstehend beschrieben, ist in den Fig. 1 bis 5 ein Kernbohrsystem 1 schematisch dargestellt und ein Kernbohrvorgang zum Erzeugen eines Bohrlochs 100 in einen mineralischen Werkstoff 80 mit einzelnen Verfahrensschritten illustriert.

In Fig. 1 ist das Kernbohrsystem 1 zu Beginn eines Kernbohrvorgangs dargestellt. Die Bohrkrone 50 befindet sich hierzu oberhalb in Richtung C' über dem Werkstoff 80. Hierbei wird das Kernbohrsystem 1 mit einem Anbohrmodus betrieben. In dem Anbohrmodus betreibt der Antrieb 14 die Bohrkrone 50 in einer vorbestimmten Anbohrdrehgeschwindigkeit zum Drehen in die Drehrichtung A oder B. Die Anbohrdrehgeschwindigkeit ist abhängig von dem Durchmesser der für den jeweiligen Bohrvorgang verwendeten Bohrkrone 50. Je größer der Durchmesser der gewählten Bohrkrone, desto geringer ist die Anbohrdrehgeschwindigkeit in dem Anbohrmodus.

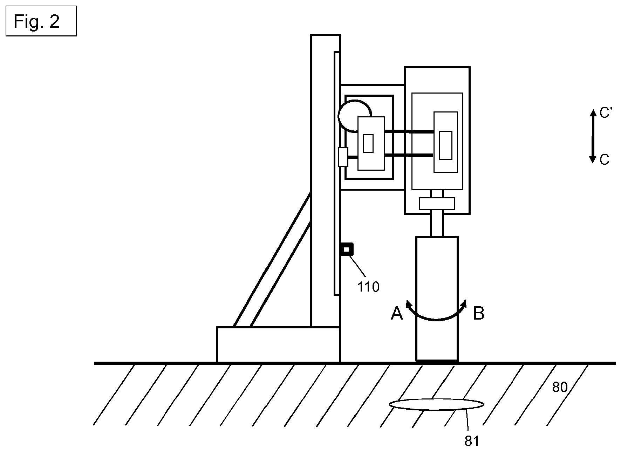

Wie in Fig. 2 gezeigt, wird anschließend die Bohrkrone 50, die sich in dem Anbohrmodus mit der Anbohrdrehgeschwindigkeit dreht, durch die Vorschubeinrichtung 30 in Richtung C auf den Werkstoff 80 zubewegt. Wenn das zweite Ende 50b der Bohrkrone 50 mit dem Werkstoff 80 in Kontakt tritt, beginnt die Bohrkrone 50, insbesondere die nicht dargestellten Schneidesegmente der Bohrkrone 50, den Werkstoff 80 zu verschneiden und ein Bohrloch 100 zu erzeugen.

Nachdem ein Anbohren des Werkstoffs 80 abgeschlossen ist, d.h. mit der Bohrkrone 50 in Richtung C eine Tiefe von ungefähr 20 mm in den Werkstoff 80 geschnitten wurde, beginnt der restliche Bohrvorgang zur Fertigstellung des Bohrlochs 100. Die Tiefe des Anbohrens ist dabei von der jeweilig verwendeten Bohrkrone 50 bzw. von dem Durchmesser der Bohrkrone 50 abhängig. Für den restlichen Bohrvorgang wird das Kernbohrsystem 1 von dem Anbohrmodus in einen Bohrmodus umgestellt. Hierzu wird die Drehgeschwindigkeit der Bohrkrone 50 von der relativ niedrigen Anbohrdrehgeschwindigkeit des Anbohrmodus zu der Bohrgeschwindigkeit des Bohrmodus erhöht. Bei gleichbleibenden Bedingungen und einer gleichbleibenden Konsistenz (d.h. Härte und Dichte) des mineralischen Werkstoffs 80 wird mit dieser Bohrgeschwindigkeit des Bohrmodus die Bohrkrone 50 bis zur Fertigstellung des Bohrlochs 100 gedreht und von der Vorschubeinrichtung 30 in Richtung C vorangetrieben.

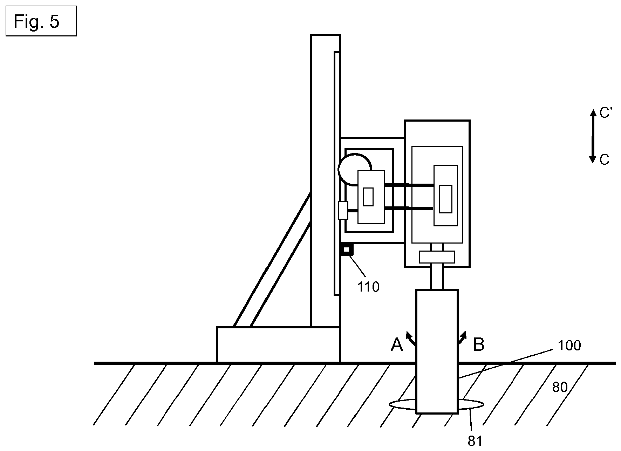

Während des Kernbohrvorgangs kann es zu unterschiedlichen Bohrsituation kommen, die alle den Kernbohrvorgang unterbrechen bzw. vollständig beenden können. So kann beispielsweise die Vorschubeinrichtung 30 an eine Stoppeinrichtung 110 anschlagen, die an einer vorbestimmten Position an dem Maschinenständer 70 angeordnet ist und die dazu dient, die Vorschubeinrichtung 30 sich nicht weiter in Richtung C entlang dem Maschinenständer 70 bewegen zu lassen. Die Stoppeinrichtung 110 kann auch als Tiefenanschlag bezeichnet werden, da sie die Kernbohrmaschine 10 und insbesondere die Bohrkrone 50 von einem tieferen Eindringen in den mineralischen Werkstoff 80 abhält, indem die Vorschubeinrichtung 30 an der Stoppeinrichtung 110 anschlägt (vgl. Fig. 5).

Des Weiteren kann es zu einer ungewollten Blockade der Vorschubeinrichtung 30 durch einen Fremdkörper kommen, welches dazu führt, dass die Vorschubeinrichtung 30 nicht weiter in Richtung C entlang dem Maschinenständer 70 bewegen werden kann. Bei dem Fremdkörper kann es sich beispielsweise um einen festen Gegenstand handeln, der sich versehentlich in Richtung C unter der Vorschubeinrichtung 30 befindet und gegen den die Vorschubeinrichtung 30 bei der Vorwärtsbewegung anschlägt, sodass kein weiteres Entlangfahren an dem Maschinenständer 70 in Richtung C möglich ist.

Darüber hinaus ist es möglich, dass die vorausgewählte Bohrtiefe von dem Kernbohrsystem 1 erreicht wurde, wodurch der Bohrvorgang nicht weitergeführt wird. Vor Beginn des Kernbohrvorgangs wird in die Steuerungseinheit 36 der Vorschubeinrichtung 30 der gewünschte Wert für die Bohrtiefe eingegeben, sodass bei Erreichen dieser Bohrtiefe (d.h. Wegstrecke in Richtung C) die Vorschubeinrichtung 30 durch die Steuerungseinheit 36 gestoppt wird. Außerdem ist es auch möglich, dass die einzelnen Bohrkronensegmente der Bohrkrone 50 im Laufe des Bohrvorgangs stumpf werden und folglich ihre Schneidewirkung im mineralischen Werkstoff 80 nachlässt. In diesem Falle kann kein weiteres Material aus dem mineralischen Werkstoff 80 geschnitten werden, sodass kein weiterer Vortrieb von der Bohrkrone 50 in den mineralischen Werkstoff 80 mehr erreicht werden kann. Die Bohrkrone 50 wird dabei nur noch in dem Bohrloch 100 ohne Vor- und Abtrieb gedreht. Dies wird auch als "Polieren" der Bohrkrone 50 bezeichnet.

Alle diese Bohrsituationen können anhand einer signifikanten Änderung wenigstens eines Bohrparameters durch die Sensoren 20, 38 von dem Kernbohrsystem 1 sowie anhand eines Stillstands der Vorschubeinrichtung 30 entlang dem Maschinenständers 70 erkannt werden. Mit anderen Worten: Sollwerte für Bohrparameter werden während des Kernbohrvorgangs nicht mehr erreicht. Insbesondere erfassen die Sensoren 20, 38, dass ein vorbestimmter Schwellwert für wenigstens einen vorbestimmten entsprechenden Bohrparameter erreicht wird. Der Schwellwert kann dabei einem prozentualen Wert des entsprechenden Bohrparameters entsprechen. So kann beispielsweise von den Sensoren 20, 38 erfasst, dass die Vorschubgeschwindigkeit der Vorschubeinrichtung 30 stark reduziert ist bzw. die Vorschubeinrichtung 30 keinen Vortrieb mehr in Richtung C entlang dem Maschinenständer 70 erzeugt. Des Weiteren kann ein Anstieg der Motorstromstärke des Antriebs 14 sowie ein Abfall des von dem Antrieb 14 erzeugten und auf die Bohrkrone 50 übertragenden Drehmoments hierzu erfasst werden. Wenn der vorbestimmte Schwellwert für den jeweils entsprechenden Bohrparameter erreicht (d.h. Schwellwert wird über-oder unterschritten) ist und kein Vortrieb mehr von der Vorschubeinrichtung 30 entlang dem Maschinenständers 70 registriert werden kann, wird der Kernbohrvorgang beendet und ein Rückfahrmodus zum Entfernen des Bohrwerkzeugs 50 aus dem Bohrloch 100 gewählt. Hierzu wird die Bohrkrone 50 durch ein Zurückbewegen der Vorschubeinrichtung 30 in Richtung C' entlang dem Maschinenständer 70 aus dem Bohrloch 100 gezogen.

Während des Bohrvorgangs kann die Bohrkrone 50 auf in dem mineralischen Werkstoff 80 befindende Hohlräume, Lücken oder Zwischenschichten aus Isolierungs- bzw. Dämmmaterial stoßen. Ebenso kann ein Durchbruch durch den mineralischen Werkstoff 80 erzeugt sein.

Das Kernbohrsystem 1 kann mit Hilfe des erfindungsgemäßen Regelverfahrens zwischen in dem mineralischen Werkstoff 80 befindlichen Hohlräumen, Lücken oder Zwischenschichten aus Isolierungs- bzw. Dämmmaterial sowie einem Durchbruch unterscheiden.

In beiden Fällen (d.h. Hohlräume, Lücken, Zwischenschichten aus Isolierungs- bzw. Dämmmaterial sowie Durchbruch) wird eine signifikante Änderung wenigstens eines Bohrparameters durch die Sensoren 20, 38 von dem Kernbohrsystem 1 sowie ein weiterer Vortrieb der Vorschubeinrichtung 30 entlang dem Maschinenständers 70 erkannt. Insbesondere erfassen die Sensoren 20, 38, dass ein vorbestimmter Schwellwert für wenigstens einen vorbestimmten entsprechenden Bohrparameter erreicht wird. Der Schwellwert kann dabei einem prozentualen Wert des entsprechenden Bohrparameters entsprechen. In dem vorliegenden Fall, in dem die Bohrkrone 50 nicht mehr den harten mineralischen Werkstoff 80 zerschneidet, wird von den Sensoren 20, 38 erfasst, dass sich die Vorschubgeschwindigkeit der Vorschubeinrichtung 30 erhöht bzw. sich die Vorschubeinrichtung 30 generell weiterhin in Richtung C entlang dem Maschinenständer 70 bewegt. Des Weiteren kann ein Abfall der Motorstromstärke des Antriebs 14 sowie ein Abfall des von dem Antrieb 14 erzeugten und auf die Bohrkrone 50 übertragenden Drehmoments hierzu erfasst werden. Dazu steigt der Drehzahlwert des Antriebs 14. Wenn der vorbestimmte Schwellwert für den jeweils entsprechenden Bohrparameter erreicht (d.h. Schwellwert wird über- oder unterschritten) ist und sich die Vorschubeinrichtung 30 weiterhin entlang dem Maschinenständers 70 bewegt, wird von den Sensoren 20, 38 zusätzlich erfasst wie weit (d.h. welche Wegstrecke) die Vorschubeinrichtung 30 noch entlang dem Maschinenständers 70 in Richtung C zurücklegen kann bevor wenigstens ein Bohrparameter wieder einen Schwellwert erreicht, der auf ein Bohren in den mineralischen Werkstoff 50 schliessen lassen kann. Mit anderen Worten: wenn nach einer Wegstrecke von ca. 30 mm in Richtung C von den Sensoren 20, 38 erfasst wird, dass sich die Vorschubgeschwindigkeit der Vorschubeinrichtung 30 reduziert, die Motorstromstärke des Antriebs 14 erhöht, das von dem Antrieb 14 erzeugte und auf die Bohrkrone 50 übertragende Drehmoment erhöht und die Drehzahlwert des Antriebs 14 reduziert, kann von dem Kernbohrsystem 1 erkannt werden, dass der Grund für die Änderung des wenigstens einen Bohrparameters lediglich das Auftreffen der Bohrkrone 50 auf ein(e) in dem mineralischen Werkstoff 80 befindenden Hohlraum, Lücke oder Zwischenschicht aus Isolierungs- bzw. Dämmmaterial ist und anschließend wieder mineralischer Werkstoff 80 zu zerschneiden ist. Das Kernbohrsystem 1 erkennt damit eindeutig, dass es sich nicht um einen Durchbruch in dem mineralischen Werkstoff 80 handelt.

Als Folge hierzu wird der Kernbohrvorgang mit dem entsprechenden Bohrmodus fortgesetzt.

Im Gegensatz dazu wird von den Sensoren 20, 38 bei einem Durchbruch in dem mineralischen Werkstoff 80 nach einer vorbestimmten Wegstrecke von ca. 30 mm in Richtung C keine entsprechende Änderung der Bohrparameter mehr erfassen, die darauf schließen lassen, dass weiterer mineralischer Werkstoff 80 zum Zerschnitten nach der vorbestimmten Wegstrecke vorhanden ist. Mit anderen Worten: nach der vorbestimmten Wegstrecke von ca. 30 mm in Richtung C erfasst das Kernbohrsystem 1 keine Reduzierung der Vorschubgeschwindigkeit der Vorschubeinrichtung 30, keine Erhöhung der Motorstromstärke des Antriebs 14, keine Erhöhung des von dem Antrieb 14 erzeugten und auf die Bohrkrone 50 übertragenden Drehmoments und keine Reduzierung der Drehzahlwert des Antriebs 14.

Als Folge hierzu wird der Kernbohrvorgang beendet und ein Rückfahrmodus zum Entfernen des Bohrwerkzeugs 50 aus dem Bohrloch 100 wird gewählt.

Mit Hilfe des erfindungsgemäßen Regelverfahrens kann das Kernbohrsystem 1 zuverlässig und eindeutig zwischen dem Vorhandensein von in dem mineralischen Werkstoff 80 befindlichen Hohlräumen, Lücken bzw. Zwischenschichten aus Isolierungs- bzw. Dämmmaterial sowie wirklichen Durchbrüchen im mineralischen Werkstoff 80 unterschieden werden. Der gesamte Kernbohrvorgang kann somit schneller und effizienter gestaltet werden.

## Patentansprüche

1. Verfahren zur Regelung eines Kernbohrsystems (1) enthaltend eine Kernbohrmaschine (10) mit einem Bohrwerkzeug (50) zum Erzeugen eines Bohrlochs (100) in einen Werkstoff (80) und eine Vorschubeinrichtung (30) zum Antreiben der Kernbohrmaschine (10) entlang einer Maschinenhalteeinrichtung (70), mit dem Verfahrensschritt
- Vorantreiben des Bohrwerkzeugs (50) in einer Richtung (C) entlang der Maschinenhalteeinrichtung (70);
**gekennzeichnet durch** die folgenden Verfahrensschritte
- Erfassen einer Vorschubgeschwindigkeit und wenigstens eines vorbestimmten Bohrparameters;
- Erfassen einer vorbestimmten Bohrsituation anhand eines Erreichens eines vorbestimmten Schwellwerts für den wenigstens einen vorbestimmten Bohrparameter; Bei Erreichen des Schwellwerts: Erfassen, ob die Vorschubgeschwindigkeit stark reduziert ist und
wenn ja: Beenden des Kernbohrvorgangs durch Auswählen eines Rückfahrmodus zum Entfernen des Bohrwerkzeugs (50) aus dem Bohrloch (100), und
wenn nein: Erfassen eines weiteren Vortriebs der Vorschubeinrichtung (30) entlang der Maschinenhalteeinrichtung (70) und Beenden des Kernbohrvorgangs durch Auswählen eines Rückfahrmodus zum Entfernen des Bohrwerkzeugs (50) aus dem Bohrloch (100), wenn die Vorschubeinrichtung (30) einen vorbestimmten Schwellwert für einen vorbestimmten Wegstreckenwert in der Richtung (C) erreicht, sowie die Kernbohrmaschine (10) einen vorbestimmten Schwellwert für den wenigstens einen vorbestimmten Bohrparameter nicht erreicht; und
- Fortsetzen des Kernbohrvorgangs durch Auswählen eines vorbestimmten Betriebsmodus, wenn die Vorschubeinrichtung (30) den vorbestimmten Schwellwert für den vorbestimmten Wegstreckenwert in der Richtung (C) nicht erreicht, sowie die Kernbohrmaschine (10) den weiteren vorbestimmten Schwellwert für den wenigstens einen vorbestimmten Bohrparameter erreicht.

2. Verfahren nach Anspruch 1,
wobei der Bohrparameter einem Drehzahlwert eines Antriebs (14) der Kernbohrmaschine (10), einem von dem Antrieb (14) erzeugten und auf das Bohrwerkzeug (50) übertragenen Drehmomentwert oder einem Stromstärkenwert des Antriebs (14) entspricht.

3. Verfahren nach Anspruch 1,
wobei der Bohrparameter einem Drehzahlwert eines Vorschubantriebs (30), einem von dem Vorschubantrieb (34) erzeugten Drehmomentwert oder einem Stromstärkenwert des Vorschubantriebs (34) entspricht.

4. Verfahren nach einem der Ansprüche 1 bis 3,
wobei der vorbestimmte Schwellwert einem vorbestimmten prozentualen Anteil an dem entsprechenden Bohrparameter entspricht.

5. Kernbohrsystem (1) enthaltend
- eine Kernbohrmaschine (10) enthaltend ein Gehäuse (12), einen Antrieb (14), eine erste Steuerungseinheit (18), Sensoren (20) und eine Antriebswelle (22), und
- eine Vorschubeinrichtung (30) zum Antreiben der Kernbohrmaschine (10) entlang einer Maschinenhalteeinrichtung (70), wobei die Vorschubeinrichtung (30) ein Gehäuse (32) umfasst, in dem ein Vorschubantrieb (34), eine zweite Steuerungseinheit (36), Sensoren (38), sowie ein Antriebsritzel (40) positioniert sind,
**dadurch gekennzeichnet, dass**
die zweite Steuerungseinheit (36) zur Durchführung des Verfahrens nach wenigstens einem der Ansprüche 1 bis 4 ausgebildet ist.

6. Kernbohrsystem (1) nach Anspruch 5,
wobei das Bohrwerkzeug (50) der Kernbohrmaschine (10) eine Bohrkrone ist.

7. Kernbohrsystem (1) nach einem der Ansprüche 5 oder 6,
wobei die Kernbohrmaschine (10) ein Getriebe (16) umfasst.

## Claims

1. Method for controlling a core drilling system (1) including a core drilling machine (10) with a drilling tool (50) for generating a borehole (100) in a material (80) and an advancing device (30) for driving the core drilling machine (10) along a machine-holding device (70), comprising the method step of
- driving the drilling tool (50) forwards in a direction (C) along the machine-holding device (70);
- **characterized by** the following method steps
- detecting an advancing speed and at least one predetermined drilling parameter;
- detecting a predetermined drilling situation on the basis of the reaching of a predetermined threshold value for the at least one predetermined drilling parameter;
- on reaching the threshold value: detecting whether the advancing speed is greatly reduced and
- if so: ending the core drilling operation by selecting a reverse-travel mode for removing the drilling tool (50) from the borehole (100), and
- if not: detecting further driving forward of the advancing device (30) along the machine-holding device (70) and ending the core drilling operation by selecting a reverse-travel mode for removing the drilling tool (50) from the borehole (100) if the advancing device (30) reaches a predetermined threshold value for a predetermined distance value in the direction (C) and the core drilling machine (10) does not reach a predetermined threshold value for the at least one predetermined drilling parameter; and
- continuing the core drilling operation by selecting a predetermined operating mode if the advancing device (30) does not reach the predetermined threshold value for the predetermined distance value in the direction (C) and the core drilling machine (10) reaches the further predetermined threshold value for the at least one predetermined drilling parameter.

2. Method according to Claim 1,
wherein the drilling parameter corresponds to a rotational speed value of a drive (14) of the core drilling machine (10), a torque value generated by the drive (14) and transferred to the drilling tool (50) or a current intensity value of the drive (14).

3. Method according to Claim 1,
wherein the drilling parameter corresponds to a rotational speed value of an advancing drive (30), a torque value generated by the advancing drive (34) or a current intensity value of the advancing drive (34).

4. Method according to one of Claims 1 to 3,
wherein the predetermined threshold value corresponds to a predetermined percentage of the corresponding drilling parameter.

5. Core drilling system (1) including
- a core drilling machine (10) including a housing (12), a drive (14), a first control unit (18), sensors (20) and a drive shaft (22), and
- an advancing device (30) for driving the core drilling machine (10) along a machine-holding device (70), the advancing device (30) comprising a housing (32) in which an advancing drive (34), a second control unit (36), sensors (38) and a drive pinion (40) are positioned,
**characterized in that**
the second control unit (36) is designed for carrying out the method according to at least one of Claims 1 to 4.

6. Core drilling system (1) according to Claim 5,
wherein the drilling tool (50) of the core drilling machine (10) is a drill bit.

7. Core drilling system (1) according to either of Claims 5 and 6,
wherein the core drilling machine (10) comprises a gear mechanism (16).

## Revendications

1. Procédé de réglage d'un système de carottage (1), comportant une sondeuse-carotteuse (10) dotée d'un outil de perçage (50) pour générer un perçage (100) dans un matériau (80) et un dispositif d'avance (30) pour entraîner la sondeuse-carotteuse (10) le long d'un dispositif de maintien de machine (70), comprenant une étape de procédé consistant à
- faire avancer l'outil de perçage (50) dans une direction (C) le long du dispositif de maintien de machine (70) ;
**caractérisé par** les étapes de procédé suivantes consistant à
- détecter une vitesse d'avance et au moins un paramètre de perçage prédéterminé ;
- détecter une situation de perçage prédéterminée en ce qu'une valeur seuil prédéterminée est atteinte pour ledit au moins un paramètre de perçage prédéterminé ;
lorsque la valeur seuil est atteinte : détecter si la vitesse d'avance est fortement réduite, et
si oui : terminer le processus de carottage en ce qu'un mode de recul est sélectionné pour retirer l'outil de perçage (50) du perçage (100), et
si non : détecter une poussée supplémentaire du dispositif d'avance (30) le long du dispositif de maintien de machine (70) et terminer le processus de carottage en ce qu'un mode de recul est sélectionné pour retirer l'outil de perçage (50) du perçage (100), si le dispositif d'avance (30) atteint une valeur seuil prédéterminée pour une valeur de parcours prédéterminée dans la direction (C), et la sondeuse-carotteuse (10) n'atteint pas une valeur seuil prédéterminée pour ledit au moins un paramètre de perçage prédéterminé ; et
- poursuivre le processus de carottage en ce qu'un mode de fonctionnement prédéterminé est sélectionné si le dispositif d'avance (30) n'atteint pas la valeur seuil prédéterminée pour la valeur de parcours prédéterminée dans la direction (C) et la sondeuse-carotteuse (10) atteint l'autre valeur seuil prédéterminée pour ledit au moins un paramètre de perçage prédéterminé.

2. Procédé selon la revendication 1, dans lequel le paramètre de perçage correspond à une valeur de vitesse de rotation d'un dispositif d'entraînement (14) de la sondeuse-carotteuse (10), à une valeur de couple générée par le dispositif d'entraînement (14) et transmise à l'outil de perçage (50) ou à une valeur d'intensité de courant du dispositif d'entraînement (14).

3. Procédé selon la revendication 1, dans lequel le paramètre de perçage correspond à une valeur de vitesse de rotation d'un dispositif d'entraînement d'avance (30), à une valeur de couple générée par le dispositif d'entraînement d'avance (34) ou à une valeur d'intensité de courant du dispositif d'entraînement d'avance (34).

4. Procédé selon l'une quelconque des revendications 1 à 3, dans lequel la valeur seuil prédéterminée correspond à un pourcentage prédéterminé du paramètre de perçage correspondant.

5. Système de carottage (1), comportant
- une sondeuse-carotteuse (10) comportant un boîtier (12), un dispositif d'entraînement (14), une première unité de commande (18), des capteurs (20) et un arbre d'entraînement (22), et
- un dispositif d'avance (30) pour entraîner la sondeuse-carotteuse (10) le long d'un dispositif de maintien de machine (70), le dispositif d'avance (30) comprenant un boîtier (32) dans lequel un dispositif d'entraînement d'avance (34), une deuxième unité de commande (36), des capteurs (38), ainsi qu'un pignon d'entraînement (40) sont positionnés,
**caractérisé en ce que** la deuxième unité de commande (36) est réalisée pour exécuter le procédé selon au moins l'une des revendications 1 à 4.

6. Système de carottage (1) selon la revendication 5, dans lequel l'outil de perçage (50) de la sondeuse-carotteuse (10) est une couronne de sondage.

7. Système de carottage (1) selon l'une quelconque des revendications 5 ou 6, dans lequel la sondeuse-carotteuse (10) comprend une transmission (16).
